(19) Europäisches Patentamt
European Patent Office
Office européen des brevets

(11) Veröffentlichungsnummer: **0 074 621**
**A2**

(12) # EUROPÄISCHE PATENTANMELDUNG

(21) Anmeldenummer: 82108307.8

(22) Anmeldetag: 09.09.82

(51) Int. Cl.³: C 08 G 73/02
C 07 C 93/04, C 10 G 33/04

(30) Priorität: 12.09.81 DE 3136212

(43) Veröffentlichungstag der Anmeldung: 23.03.83 Patentblatt 83/12

(84) Benannte Vertragsstaaten: DE FR GB NL

(71) Anmelder: HOECHST AKTIENGESELLSCHAFT
Postfach 80 03 20
D-6230 Frankfurt/Main 80(DE)

(72) Erfinder: Diery, Helmut, Dr.
Theresenstrasse 45
D-6233 Kelkheim (Taunus)(DE)

(72) Erfinder: Wester, Norbert, Dr.
Sachsenring 12
D-6238 Hofheim am Taunus(DE)

(72) Erfinder: Hille, Martin, Dr.
In den Eichen 46
D-6237 Liederbach(DE)

(54) **Kationische Ethylenoxid-Propylenoxid- bzw. Ethylenoxid-Butylenoxid-Polymere, Verfahren zu deren Herstellung und deren Verwendung.**

(57) Gegenstand der Erfindung sind somit Verbindungen der Formel I

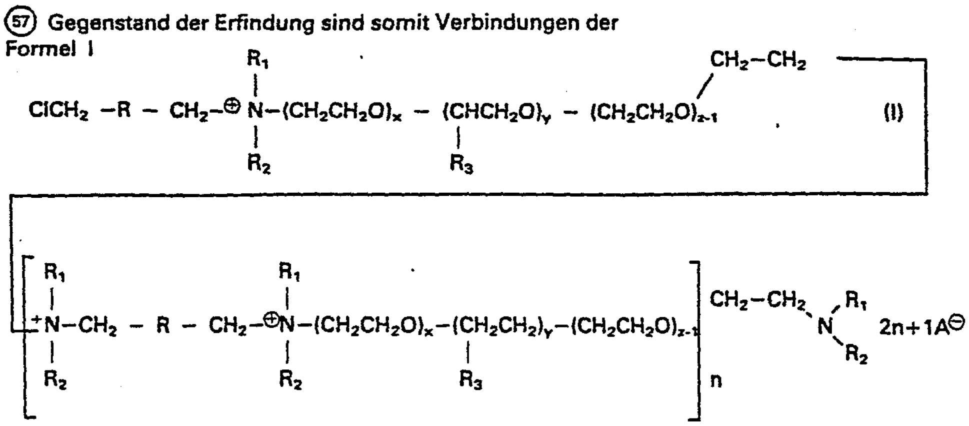

(I)

worin R einen Aromaten, vorzugsweise Phenylen, $R_1$ und $R_2$ $C_1$-$C_4$-Alkyl, vorzugsweise $C_1$-$C_2$-Alkyl, $R_3$ Methyl oder Ethyl, x und z zusammen eine Zahl von 2 bis 360, vorzugsweise von 2 bis 140, y eine Zahl von 15 bis 70, vorzugsweise 25 bis 60, n eine Zahl von 1 bis 10 und $A^-$ ein Anion, vorzugsweise Chlorid oder Bromid bedeuten, Verfahren zu deren Herstellung und deren Verwendung als Demulgatoren für die Spaltung von Rohölemulsionen und als Korrosionsinhibitoren in Anlagen für die Erdgas- und Rohölförderung und -aufbereitung.



Croydon Printing Company Ltd

# Kationische Ethylenoxid-Propylenoxid- bzw. Ethylenoxid-Butylenoxid-Polymere, Verfahren zu deren Herstellung und deren Verwendung

Bei der Förderung von Rohölemulsionen erfolgt bekanntlich mit der Zeit eine zunehmende Verwässerung der geförderten Rohöle. Dieses mitgeförderte Wasser bildet mit dem Rohöl eine Wasser-in-Öl-Emulsion, wobei in dem einemulgierten Wasser Salze wie Natriumchlorid, Calziumchlorid und Magnesiumchlorid gelöst sein können. Außerdem sind in den Rohölemulsionen häufig Kohlensäure und Schwefelwasserstoff enthalten. All diese Substanzen bewirken Korrosionsschäden in den Fördereinrichtungen und in der Raffinerie, so daß allein schon aus diesem Grund das salzhaltige Wasser aus der Rohölemulsion mit Hilfe von Demulgatoren abgetrennt werden muß.

Ein Demulgator hat die Aufgabe, bei einer möglichst geringen Anwendungskonzentration die Emulsion zu brechen und bei diesem Separationsprozeß möglichst ohne Aufwendung oder mit minimaler zusätzlicher Wärme eine vollständige Wasserabscheidung zu bewirken und den Salzgehalt auf ein Minimum zu reduzieren. Die Qualitätskriterien für geliefertes Rohöl sind der Restgehalt an Salz und der Wassergehalt.

Die Rohöle sind je nach ihrer Provinienz unterschiedlich zusammengesetzt und die im Öl vorhandenen natürlichen Emulsionsstabilisatoren besitzen einen komplizierten und differenzierten chemischen Aufbau, so daß für jedes Öl gezielt Spalter entwickelt werden müssen. Bedingt durch unterschiedliche Förderungs- und Aufbereitungsbedingungen werden die Anforderungen, die an einen Demulgator gestellt werden, noch vielfältiger. Durch das ständige Erschließen neuer und Änderung der Förderbedingungen älterer Ölfelder bleibt daher die Entwicklung optimaler Demulgatoren für den jeweiligen Zweck eine aktuelle Aufgabe.

Es wurde nun gefunden, daß neue kationische Ethylenoxid-Propylenoxid- bzw. Ethylenoxid-Butylenoxid-Polymere gute Demulgier- und Entsalzungseigenschaften bei Rohölen aufweisen sowie die Korrosion wirkungsvoll inhibieren.

Gegenstand der Erfindung sind somit Verbindungen der Formel I

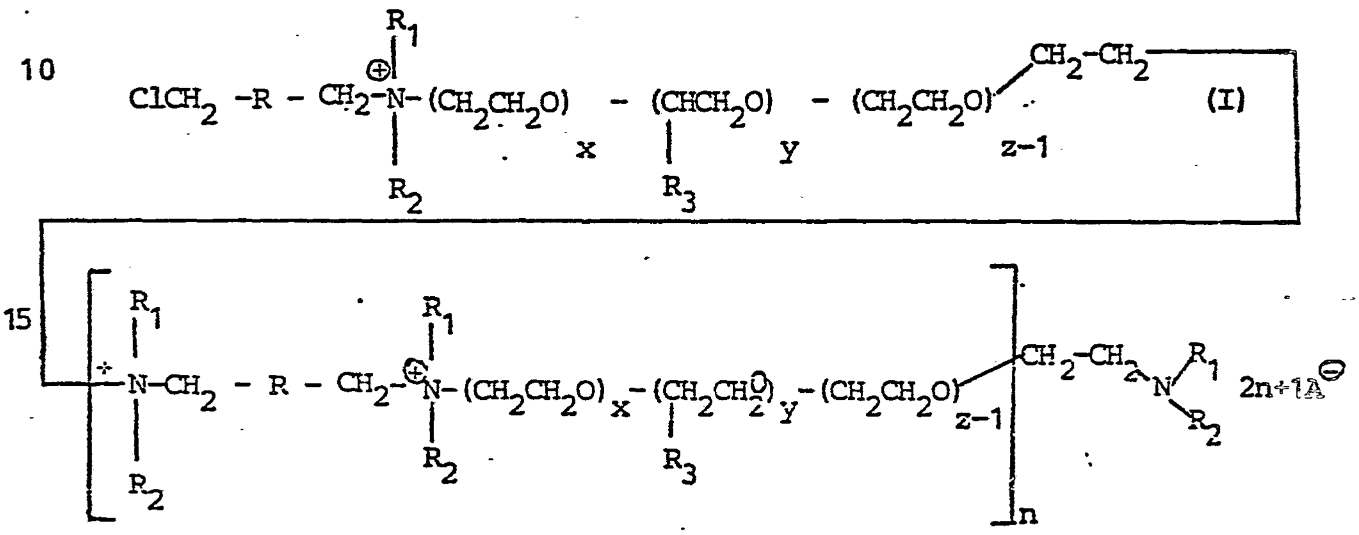

(I)

worin R einen Aromaten, vorzugsweise Phenylen, $R_1$ und $R_2$ $C_1$-$C_4$-Alkyl, vorzugsweise $C_1$-$C_2$-Alkyl, $R_3$ Methyl oder Ethyl, x und z zusammen eine Zahl von 2 bis 360, vorzugsweise von 2 bis 140, y eine Zahl von 15 bis 70, vorzugsweise 25 bis 60, n eine Zahl von 1 bis 10 und $A^-$ ein Anion, vorzugsweise Chlorid oder Bromid bedeuten. Die Gruppen $R_1$, $R_2$ und $R_3$ können gleich oder verschieden sein, vorzugsweise sind $R_1$, $R_2$ und $R_3$ gleich. Auch die Werte für x und z können gleich oder verschieden sein.

Die Verbindungen der obigen Formel I werden hergestellt, indem man eine Verbindung der Formel II

$$\begin{matrix}R_1 \\ R_2\end{matrix}\!\!>N-(CH_2-CH_2-O)_x-(CH(R_3)-CH_2-O)_y-(CH_2-CH_2-O)_{z-1}-CH_2-CH_2-N\!\!<\!\!\begin{matrix}R_1 \\ R_2\end{matrix} \qquad (II)$$

mit einem Bis (halogenmethyl)aromaten, vorzugsweise Bis(chlormethyl)benzol umsetzt.

Die als Ausgangsverbindungen dienenden Diamine der Formel II werden erhalten, indem man nach bekannten Verfahren zunächst ein Ethylenoxid-Propylenoxid- bzw. Ethylenoxid-Butylenoxid-Blockpolymer der Formel III

$$HO-(CH_2CH_2O)_x-(CH(R_3)CH_2O)_y-(CH_2CH_2O)_z-H \qquad (III)$$

chloriert, beispielsweise mit Thionylchlorid in Substanz oder in einem inerten Lösungsmittel bei Temperaturen von ca. 80 bis 120°C, vorzugsweise bei 90°C. Die dabei erhaltenen 1,ω-Dichlorverbindung der Formel IV

$$Cl-(CH_2CH_2O)_x-(CH(R_3)CH_2O)_y-(CH_2CH_2O)_{z-1}-CH_2CH_2Cl \qquad (IV)$$

wird dann mit einem Amin der Formel $HNR_1R_2$ zu den Verbindungen der Formel II umgesetzt. Diese Reaktion erfolgt durch mehrstündiges Erhitzen der Reaktionspartner in wäßrig-alkoholischer Lösung bei Temperaturen von ca. 80 bis 200°C, vorzugsweise in isopropanolischer Lösung in einem Rührautoklaven bei 130 bis 170°C.

Die Reaktion der Diamine der Formel II mit dem Bis-(halomethyl)aromaten erfolgt durch mehrstündiges Erhitzen der Reaktionspartner in einem niedrig siedenden Alkohol bei dessen Siedetemperatur, beispielsweise in Ethanol, Isopropanol oder Isobutanol. Das Molverhältnis von Diamin II zum Bis(halomethyl)aromaten beträgt 1:1. Als Endprodukte erhält man Polymere, deren Kettenlänge ungefähr durch die Zahlen 1 bis 10 für den Index n in der Formel I angegeben werden können.

Die erfindungsgemäßen Verbindungen sind gelbe bis braune, hochviskose Produkte, die in jedem Verhältnis mit Wasser bzw. Wasser/Alkohol-Gemischen verdünnbar sind.

Sie eignen sich sehr gut zum Spalten von Emulsionen aus Wasser und Erdöl. Man setzt diese Produkte den Rohölemulsionen in Konzentrationen von 2 bis 400, vorzugsweise 5 bis 80 ppm zu entweder in unverdünnter Form oder als Lösung, die im Verhältnis 1 : 200 mit einem organischen Lösungsmittel verdünnt werden. Darüberhinaus inhibieren diese Verbindungen die Korrosion in den Anlagen für die Erdgas- und Rohölförderung und -aufbereitung.

Allgemeine Darstellung der 1,ω-Dichlorpolyether (IV)

Zu 1 Mol eines Diols der allgemeinen Formel III läßt man bei 50°C 2,4 Mol Thionylchlorid unter Rühren so schnell zulaufen, daß die Innentemperatur nicht über 90°C ansteigt. Man hält 3 h bei dieser Temperatur, entfernt die sauren Gase durch Einleiten eines kräftigen $N_2$-Stromes und erhält die Dichloride IV in nahezu quantitativer Ausbeute.

Allgemeine Darstellung der 1,ω-Diamine (II)

1 Mol eines Dichlorids der Formel IV wird zusammen mit 10 Mol eines Amins der Formel $HNR_1R_2$ in wäßrig-isopropanolischer Lösung 5 Stunden bei 160°C in einem Autoklaven gerührt. Man setzt 2 Mol festes KOH zu, dekantiert oder filtriert vom ausgefallenen KCl ab, entfernt überschüssiges Amin, Isopropanol und Wasser durch Destillation und erhält die 1,ω-Diamine II in guten Ausbeuten.

Allgemeine Darstellung der polyquaternären Ammoniumverbindungen I

1 Mol eines 1,ω-Diamins der Formel (II) wird zusammen mit 1 Mol eines Bis(halogenmethyl)aromaten in alkoholischer Lösung 6 Stunden lang unter Rückfluß erhitzt. Nach Abdestillieren des Alkohols erhält man die polyquaternären Ammoniumverbindungen I in nahezu quantitativer Ausbeute.

Beispiel 1

387 g (0,2 Mol) eines Ethylenoxid-Propylenoxid-Blockpolymers mit einem PyO-Block von 1750 plus ca. 10 % EO, Mol = 1935 aus OH-Zahl, werden nach den oben beschriebenen allgemeinen Darstellungsmethoden schrittweise mit $SOCl_2$, Dimethylamin und 1,4-Bis(chlormethyl)benzol zu 410 g (95 % d.Th.) der polyquaternären Verbindungen Ia umgesetzt.

$$(R_1 = R_2 = R_3 = CH_3, \quad y = 30) \quad x + z = 4,2.$$

Beispiel 2

Ausgehend von einem Ethylenoxid-Propylenoxid-Blockpolymer mit einem PyO-Block von 1750 plus ca. 20 % EO, Mol 2550 aus OH-Zahl, erhält man mit einer Ausbeute von 92 % d.Th. auf die gleiche Weise die Verbindung Ib

$$(R_1 = R_2 = R_3 = CH_3, \quad y = 30). \quad x + z = 18,2$$

Beispiel 3

Ausgehend von einem Ethylenoxid-Propylenoxid-Blockpolymer mit einem Pyo-Block von 1750 plus ca. 40 % EO, Mol 2700 aus OH-Zahl, erhält man mit einer Ausbeute von 93 % d.Th. auf die gleiche Weise die Verbindung Ic

$$(R_1 = R_2 = R_3 = CH_3, y = 30) \quad x + z = 21,6$$

In den folgenden Tabellen wird die demulgierende Wirkung der erfindungsgemäßen Verbindungen I an Rohölemulsionen bei den in den Ölfeldern üblichen Bedingungen und Einsatzmengen aufgezeigt.

Die Emulgatoren wurden dabei in 50%igen isobutanolischen Lösungen angewendet, die bei Mikrodosiereinrichtungen injiziert werden. Die Abscheidung des emulgierten Wassers erfolgt in konischen, kalibrierten, mit Stopfen verschließbaren Gläsern und die Menge der Emulsion beträgt jeweils 100 $cm^3$. In den Tabellen werden die in bestimmten Zeiten abgeschiedenen Mengen Emulsionswasser in % angegeben. Durch Vorversuche wurde der absolute Wassergehalt der Emulsionen jeweils nach Dean-Stark bestimmt. Die Dosiermenge der Demulgatoren, der absolute Wassergehalt der Emulsion, die Separiertemperatur und der Emulsionsursprung sind in den einzelnen Tabellen aufgeführt.

Tabelle 1

Demulgiertemperatur : 75°C
Wassergehalt der Emulsion: 33 %
Dosiermenge : 80 ppm
Ursprung: Bachaquero/Venezuela

| Beispiel | Stunden: 1 | 3 | 6 | 12 | 18 |
|---|---|---|---|---|---|
| | % Wasserseparation | | | | |
| 1 | 28 | 42 | 53 | 72 | 98 |
| 2 | 18 | 34 | 46 | 65 | 99 |
| 3 | 66 | 76 | 85 | 97 | 100 |
| ohne Demulgator | 0 | 0 | 0 | 0 | 0 |

Tabelle 2

Demulgiertemperatur : 55°C
Wassergehalt der Emulsion : 27 %
Dosiermenge : 35 ppm
Ursprung : Hassi Messaoud/Algerien

| Beispiel | Minuten 10 | 20 | 30 | 60 | 120 |
|---|---|---|---|---|---|
| 1 | 65 | 76 | 84 | 93 | 98 |
| 2 | 88 | 93 | 98 | 100 | 100 |
| 3 | 48 | 73 | 86 | 94 | 100 |
| ohne Demulgator | 0 | 0 | 0 | 0 | 0 |

Tabelle 3

Demulgiertemperatur : 65°C
Wassergehalt der Emulsion : 17,5 %
Dosiermenge : 40 ppm
Ursprung : Sarir / Libyen

| | | % Wasserseparation | | | | |
|---|---|---|---|---|---|---|
| Beispiel | Minuten: | 30 | 60 | 90 | 120 | 180 |
| 1 | | 8 | 29 | 56 | 83 | 98 |
| 2 | | 42 | 81 | 90 | 96 | 100 |
| 3 | | 76 | 86 | 94 | 99 | 100 |
| Ohne Zusatz | | 0 | 0 | 0 | 0 | 0 |

Inhibierung der Korrosion

Zur Ermittlung der Korrosionsinhibitorwirkung wurden Teststreifen aus Kohlenstoffstahl mit einer Oberfläche von 20 $cm^2$ bei 60°C jeweils 6 Stunden lang in 20%ige Natriumchloridlösungen getaucht, die einen Zusatz von 10 mg/l, 20 mg/l bzw. 30 mg/l des zu prüfenden Produktes enthielten. Durch die Testlösungen perlte während der Prüfung ein ständiger Strom von Kohlendioxid. Die Inhibierung wird in % angegeben, wobei der Blindwert ohne Inhibitor als Bezugsgröße 0 % ist.

Die erhaltenen Ergebnisse sind in Tabelle 4 zusammengestellt.

Tabelle 4

| Einsatzmenge (mg/l | 10 | 40 |
|---|---|---|
| | ( % Schutz) | |
| Beispiel 1 | 16,3 | 70 |
| Beispiel 2 | 14,0 | 65 |
| Beispiel 3 | 12,0 | 60 |

PATENTANSPRÜCHE:

1. Verbindungen der Formel

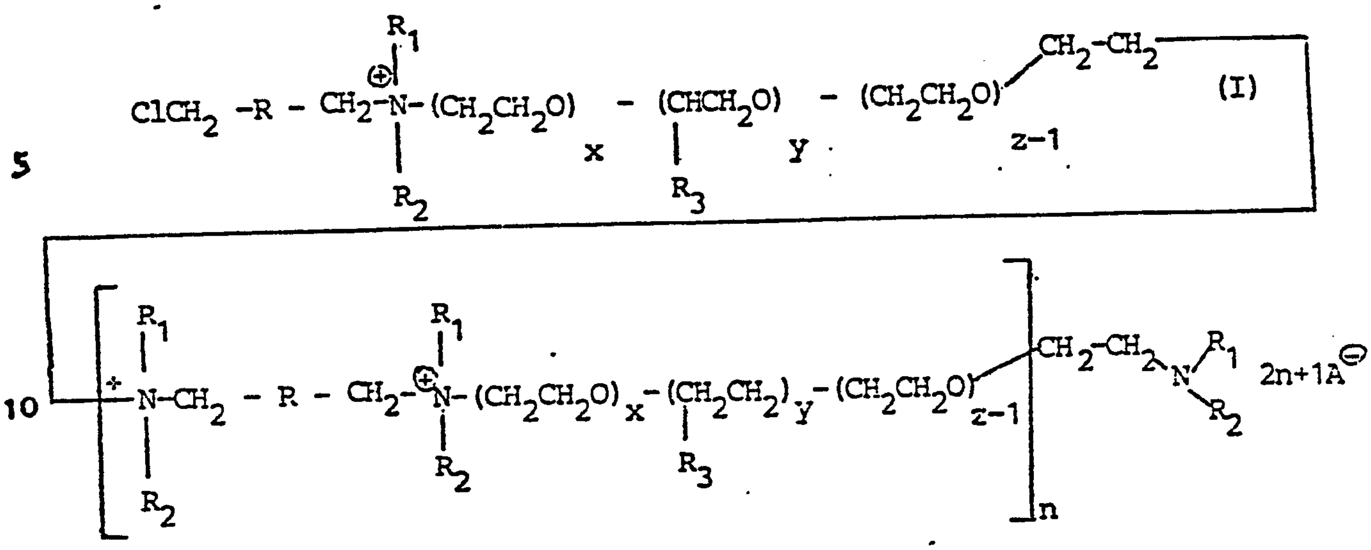

(I)

worin R einen Aromaten, vorzugsweise Phenylen, $R_1$ und $R_2$ $C_1$-$C_4$-Alkyl, vorzugsweise $C_1$-$C_2$-Alkyl, $R_3$ Methyl oder Ethyl, x und z zusammen eine Zahl von 2 bis 360, vorzugsweise von 2 bis 140, y eine Zahl von 15 bis 70, vorzugsweise 25 bis 60, n eine Zahl von 1 bis 10 und $A^-$ ein Anion, vorzugsweise Chlorid oder Bromid bedeuten.

2. Verfahren zur Herstellung der Verbindungen nach Anspruch 1, dadurch gekennzeichnet, daß man eine Verbindung der Formel II

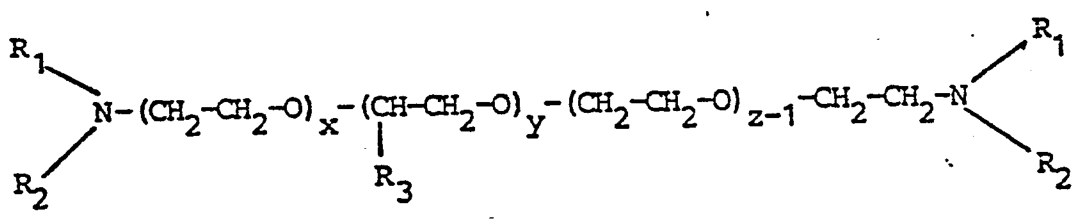

(II)

mit einem Bis(halogenmethyl)aromaten umsetzt.

3. Verwendung der Verbindungen nach Anspruch 1 als Demulgatoren für die Spaltung von Rohölemulsionen und als Korrosionsinhibitoren in Anlagen für die Erdgas- und Rohölförderung und -aufbereitung.